# EUROPEAN PATENT APPLICATION

(11) **EP 2 141 516 A2**
(43) Date of publication of application: **06.01.2010**
(21) Application number: 09251699.6
(22) Date of filing: 01.07.2009
(51) Int. Cl.: G01W 1/02, G01W 1/17, G08G 1/0967

(54) **Mobile environmental detector**

(30) Priority: 01.07.2008 US 133773 P; 10.06.2009 US 482162; 29.06.2009 US 494016
(71) Applicant: Quixote Transportation Technologies, Inc., Chicago, IL 60601 (US); Fuller, Gary, Town & Country, MO 63017 (US); Ladow, Spencer, Canonsburg, PA 15317 (US); Campbell, Larry, Uniontown, PA 15401 (US)
(72) Inventor: Gentles, Thomas, St. Louis Missouri 63017 (US); Fuller, Gary, Town & Country Missouri 63017 (US); Golberstein, Moshe, Minneapolis MN 55416 (US); Ladow, Spencer, Canonsburg, Pennsylvania 15317 (US); Campbell, Larry, Uniontown Pennsylvania 15401 (US)
(74) Representative: McLeish, Nicholas Alistair Maxwell

(57) **Abstract**

A system determines dew point and temperatures through a mobile platform. The system identifies a likelihood of condensation forming on a roadway surface. A controller may process the data to determine the likelihood of frost, ice, and/or black ice conditions. Some systems provide aural, visual, and/or tactile signals or feedback to identify a condition or a change in conditions. The change, condition, and/or data may be associated with position data.

## Description

### BACKGROUND OF THE INVENTION

### Technical Field.

The inventions relate to systems that monitor weather conditions, and more particularly to, mobile systems that monitor atmospheric conditions and/or roadway conditions.

### Related Art.

Systems may monitor the weather to identify or predict adverse conditions. Weather observations and monitoring stations may monitor variables such as temperature and wind speed to determine how the weather may impact the condition of a road or a highway. The information may be used by municipalities to support maintenance and traffic management, and by travelers to determine departure times, route selections, and driving behaviors.

Environmental data may be collected from weather stations and radars. The data may be location specific because many weather stations are stationary and many types of radar may have a fixed range. These systems may not provide access to accurate weather and route conditions when communication is lost or signals become subject to mutlipath that may occur when environments change.

### SUMMARY

A system determines dew point and temperatures through a mobile platform. The system identifies a likelihood of condensation forming on a roadway surface. A controller may process the data to determine the likelihood of frost, ice, and/or black ice conditions. Some systems provide aural, visual, and/or tactile signals or feedback to identify a condition or a change in conditions. The change, condition, and/or data may be associated with position data.

Other systems, methods, features, and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the inventions. Moreover, in the figures, like referenced numerals designate corresponding parts throughout the different views.
Figure 1 is a weather information system that interfaces mobile sensing elements.
Figure 2 is a process that determines a temperature at which air may become saturated.
Figure 3 is a cross-sectional view of a portion of the weather information system or a mobile monitoring device that includes the mobile sensing elements.
Figure 4 is a top view of Figure 3.
Figure 5 is a top view of a circuit assembly connected to an interface cable.
Figure 6 is a side view of a sensing element connected to a connector.
Figure 7 are views of a sensor and an outer shell cover.
Figure 8 are views of a substantially flat and cylindrical sensor cover screen.
Figure 9 is a functional view of the weather information system.

### DETAILED DESCRIPTION OF THE PREFERRED EMBODIMENTS

Weather monitoring and reporting systems improve weather analysis and predictions. By augmenting fixed sites with mobile sensors, systems may increase monitoring coverage and/or resolution. Some systems and methods may monitor surface and/or atmospheric conditions through a mobile platform. Native or derived data may be linked to position data and/or in-vehicle data at the vehicle or a remote site. In some systems, in-vehicle and out-of-vehicle (e.g., external to the vehicle) communication occurs through wireless links. Transceivers (and/or transmitters and/or receivers) may provide short and/or long range radio, optical, or operational links that do not require an entire physical medium to receive or transmit data. The communication protocol or network may provide an interoperable communication link with other vehicles (e.g., devices or structures for transporting persons or things), in-vehicle devices, and/or external devices.

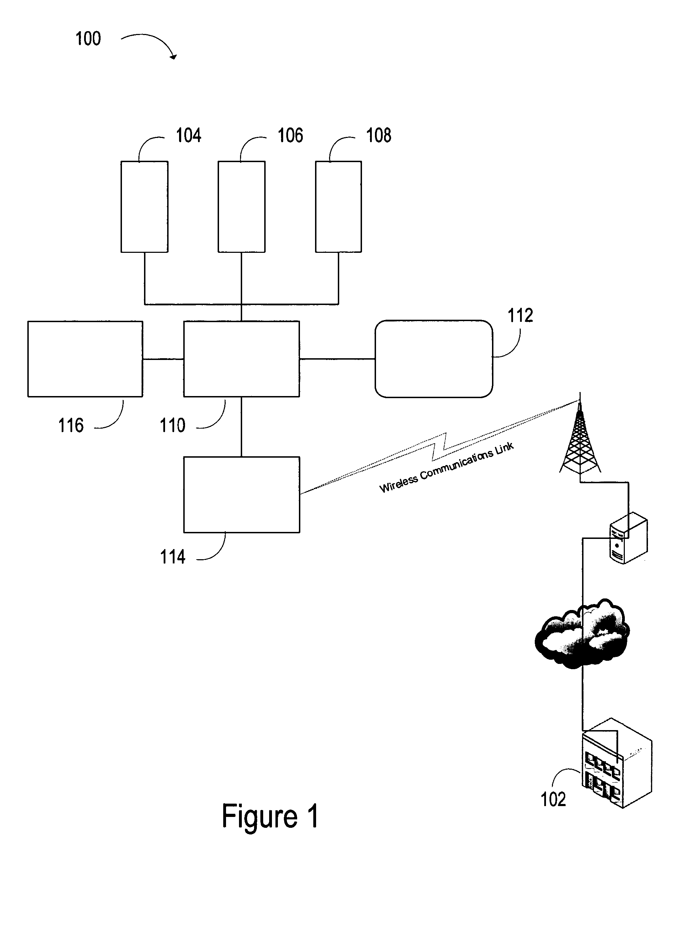

Figure 1 illustrates a mobile monitoring device 100 in communication with a remote weather operating site 102. The operating site 102 may comprise two or more servers (e.g., server farm or cluster) that operate and appear to an on-board mobile monitoring device 100 as if they were a single unit. The clusters may improve network flow through load balancers that spread work (e.g., requests and responses) between the servers. Before a request is parsed and forwarded to the servers, data may pass through one or more firewalls that may incorporate filters that allow or deny a request to enter or leave one or more local area networks serving the clusters. A packet filtering may accept or reject packets, including the exchange of data sets that may be exchanged between the on-board mobile monitoring device 100 and the clusters.

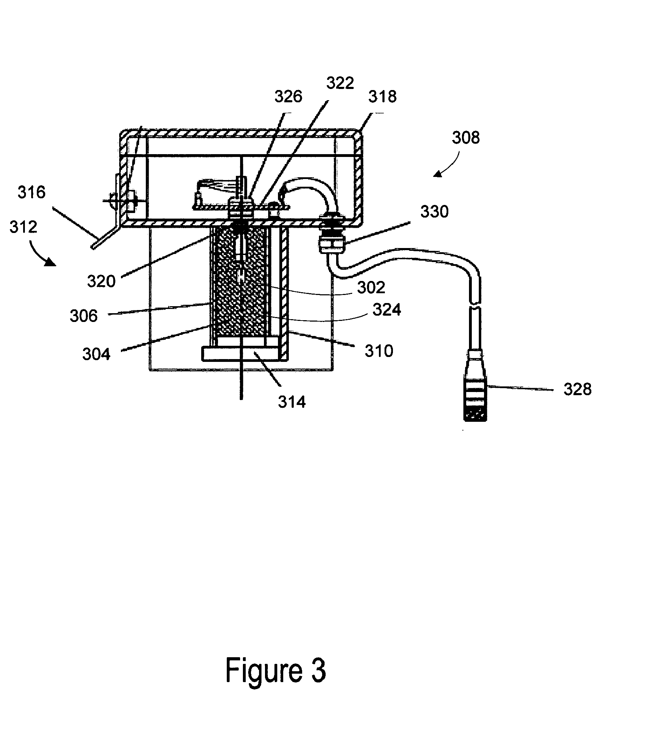

In Figure 1, a mobile monitoring device 100 includes a surface temperature sensor 104, a relative humidity sensor 106, and an ambient air temperature sensor 108. While illustrated as separate sensors, two or more of the sensors may comprise a unitary element (e.g., the relative humidity sensor 106 and ambient air temperature sensor 108 may comprise a single sensor such as the mobile sensing elements 322 shown in Figure 3). The sensors may interface a controller or processor 110 and an on-board storage device (or storage devices) that may have one or more (e.g., two or more) memory partitions. In some exemplary mobile monitoring devices 100, the memory is accessible only to weather related sites such as a remote weather operating site or Internet site 102. The memory may be inaccessible to in-vehicle Original Equipment Manufacturer (OEM) or aftermarket systems to ensure data integrity. Hardware, data encryption, or software may maintain data security. Data accuracy and/or conformity may be important to users or applications that monitor road conditions.

The mobile monitoring device 100 may communicate with one or more external devices or vehicle components to acquire weather, road, location, and/or vehicle characteristics. An optional interface or console 112 may allow a driver or passenger to review measured or derived characteristics, submit annotations, and/or input data to establish thresholds and/or satisfy or respond to one or more queries from the controller or processor 110. In some applications, the interface or console 112 may allow an operator to enter an identifier through an interactive user interface (e.g., identification number) so that recorded characteristics may be associated with an operator or vehicle. In some applications, the interface consoled 112 may allow an operator to enter a point of interest indicator that may allow recorded characteristics to be associated with locations along a route or identified on a map. Alternatively, the optional interface or console 112 may comprise or interface a passive display that may comprise a Light Emitting Diode display (LED), a Liquid Crystal display (LCD), or a remote a controller (e.g., computer screen, portable computer, a tablet computer, a personal digital assistant (PDA), a television, and/or other displays) wirelessly or tangibly linked to the controller or processor 110.

In some devices 100, the optional interface or controller 112 may render real-time or delayed audio, visual, and/or tactile warnings to an operator, a vehicle or, a remote destination when a measured air temperature falls below a measured or derived dew point. The alerts may indicate when a surface temperature falls below a dew point, an air temperature falls below a dew point and a pre-programmed freeze point, and/or a surface temperature falls below a dew point and a freeze point. Other visual, audio, or tactile alerts may indicate that the air temperature is below a dew point and above a freeze point and/or the surface temperature is below a dew point and above a freeze point, and/or a change in conditions.

In some mobile monitoring devices 100, in-vehicle and/or out-of-vehicle communication may occur through a wireless protocol. The communication protocol may provide an interoperable communication link with vehicle sensors, weather sensors, or external applications and/or sites. In some systems, the wireless links provides connectivity when the wireless network or a wireless service provider indicates a communication channel capacity or excess communication channel capacity to transfer some or all of the desired data to a destination. A mobile monitoring device push may load desired data to a destination and may keep a wireless connection open to allow the mobile monitoring device 100 to continue to send desired data or respond to external requests (e.g., queries) as weather data is monitored (e.g., in real-time). A mobile monitoring device 100 may pull data from a site in real-time too through a persistent or non-persistent connection.

In Figure 1, an optional wireless transceiver 114 may be compliant with a cellular or wireless protocol, a wireless or cellular telephone, a radio, a satellite, or other wireless communication system may link the mobile monitoring device 100 to a privately accessible or publicly accessible distributed network or directly to an intermediate surrogate or central operations center. The communication link may comprise Mobile-FI or a low-cost, always-on, mobile broadband wireless network that may have IP (Internet Protocol) roaming & handoff (at more than about 1 Mbit/s), MAC and PHY with IP and adaptive antennas, full mobility or substantial mobility up to vehicle speeds of about 88.7 - 162 km/h or higher (e.g., 250 km/h), operate in frequency bands (below 3.5 GHz), and/or utilize a packet architecture and have a low latency.

In some applications, the mobile monitoring device 100 may be Ultra-wideband compliant and may transmit information by generating radio energy at specific time instants and occupying large bandwidth, thus enabling a pulse-position or time-modulation communications. This protocol may be different from other wireless protocols that transmit information by varying the power level, frequency, and/or phase of a sinusoidal wave.

In other applications, the mobile monitoring device 100 may be complaint with WiMax or IEEE 802.16a or may have a frequency band within a range of about 2 to about 11 GHz, a range of about 31 miles, and a data transfer rate of about 70 Mbps. In other applications, the mobile monitoring device 100 may be compliant with a Wi-Fi protocols or multiple protocols or subsets (e.g., ZigBee, High Speed Packet Access (e.g., High Speed Downlink Packet Access and/or High Speed Uplink Packet Access), Bluetooth, Mobile-Fi, Ultrawideband, Wi-Fi, WiMax, mobile WiMax, cellular, satellite, etc., referred to as the transceiver protocols) that may be automatically detected and selected (through a handshaking, for example, that may automatically determine the source type of the transmission e.g., by a query for example, and may attempt to match it) and may enable this automatic access through one or more communication nodes.

In Figure 1, automatic protocol selection and/or detection may occur through an exchange of signals that acknowledge a communication or a transfer of information or data may occur at a desired or predetermined communication channel capacity. In some alternatives, a device 100 may not directly communicate or connect to a weather operating site 102. Like a mesh network, mobile monitoring devices 100 may transmit information between themselves (like an electronic bucket brigade) which may be relayed to a destination. Built-in hardware and/or software (e.g., logic) may allow some devices 100 to relay information from one device to another (or from one vehicle to another, from a device 100 to a stationary transceiver to another vehicle, etc.) when wireless networks are unavailable, device failures occur, bandwidth restrictions occur, or other communication conditions warrant. In some devices 100, a receive-and-relay feature may allow devices 100 to conserve power by not transmitting data or messages continuously and directly to other mobile monitoring devices, vehicles, and/or weather operating sites. Some devices 100 may communicate data across relatively short distances (e.g., a few yards or 100 yards between mobile or stationary devices, for example) instead of the larger distances a communication to a stationary cellular base station may require.

An optional second receiver or transceiver 116 in the mobile monitoring device 100 may track location through navigation signals. The navigation signals may comprise floating vehicle data (e.g., through a wireless triangulation), a GPS (global positioning system) protocol, a differential GPS protocol, a trilateraleralism of external encoded signals (e.g., may be in the radio frequency range), protocols that monitor continuously transmitted coded signals, a mileage time stamping, a distance measuring instrument, or other locating protocols or systems (referred to as the location protocols). When the mobile monitoring device 100 or other vehicle systems communicate with location determining systems (e.g., GPS, wireless triangulation, trilateraleralism of encoded signals, etc.), location data may be received or derived, logically linked to the weather data, and stored in a logically distinct or common portion of the memory within the on-board or local storage device. In some devices 100, the location coordinates (e.g., GPS-coordinates that may include latitude, longitude, altitude, and time) and/or other vehicle or powertrain sensor data (e.g., received or originating from RPM sensors, vehicle speed sensors, intake air temperature sensors, barometric pressure sensors, manifold absolute pressure sensors, brake/ brake light activation sensors, headlight activation sensors, wiper on sensors, antilock brake system sensors, pitch and roll sensors, and/or vehicle location sensors, for example) may be read directly from the sensors, through an OEM powertrain controller or through an OEM or aftermarket tangible or virtual in-vehicle bus. Alternative system may further monitor in-vehicle calculated data such as deceleration, acceleration, vehicle in skid and/or wheels in spin, for example. The data may be stored in memory of the on-board storage device before being transmitted separately or with the weather and/or other vehicle data through one or more of the transceiver protocols described above.

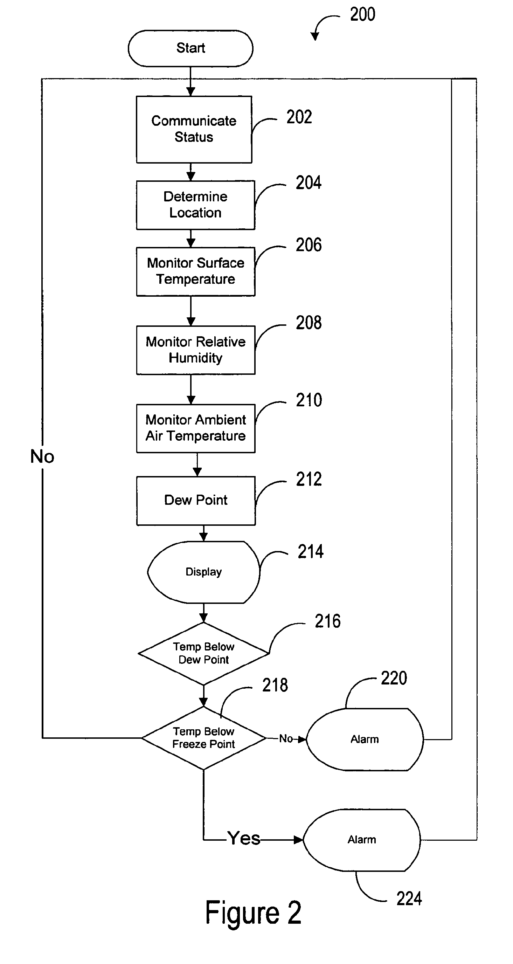

An exemplary detection process 200 shown in Figure 2 enhances road and weather condition analysis and forecasts. After a mobile monitoring device 100 is authenticated, the mobile monitoring device 100 may communicate the condition of the device 100 or sensor outputs at optional act 202. Some processes may transmit native and/or derived data with other data that may indicate the success or failure of some attempted action (e.g., a sensor reading, dew point calculation, road condition identification, vehicle bus access, or transmission to a destination). The status may be read from a local memory (e.g., a memory directly connected to the mobile monitoring device 100 and/or a memory module or element that may be contributed to a shared addressable memory space that may interface one or more nodes of the mobile monitoring device 100) before it is transmitted to a remote destination (e.g., an end user server or database).

When device or vehicle location is tracked, position, velocity, and time may be tracked in all or many weather conditions at optional act 204. Through a measurement of time differences between the times a signal is transmitted to the time of its reception, some processes may determine the current time, latitude, longitude, and altitude of a mobile monitoring device 100 or vehicle. Some exemplary processes may read or confirm location information by accessing an in-vehicle tangible or virtual bus that services other aftermarket or OEM sensors, systems, and/or devices (e.g., powertrain bus, entertainment and comfort bus, etc.).

Weather information may be monitored by two or more weather sensors positioned on and about or within the vehicle (e.g., on/near vehicle bumper, a vehicle roof, within/near an air intake manifold). In some processes, the sensors may measure weather conditions continuously or at periodic intervals and in some processes, make measurements without physical contact with or transmission of signals designed or intended to reflect off of a physical surface like a roadway (e.g., a passive system). In some other processes the sensors may measure weather conditions continuously or at periodic intervals by transmitting signals that may reflect off of a physical surface like a roadway (e.g., an active system). In one process, an auto-polling may read or determine the status of each of the sensors, such as the surface temperature (e.g., monitored through an infrared receiver or sensor that absorbs infrared emissions from a road surface or monitored from one or more non-intrusive elements), the relative humidity, and the ambient air temperature at acts 206, 208, and 210. In an alternative process, an event-driven process may supplement or replace the auto-polling process, so that an in-vehicle processor may be alerted or may check the status of a device (e.g., read a sensor output, access an in-vehicle bus, etc.) when an event occurs or is likely to occur or when change occurs or is likely to occur (e.g., the likelihood of frost, ice, and/or black ice conditions). In some processes, certain events may preempt others when assigned or programmed with a higher priority and some processes may maintain an event queue (retained in local memory) to avoid the loss of events that may occur at the same or nearly the same instance. In some processes an event may comprise an action or an occurrence that may occur automatically, such as for example, a change in a sensor output, data received from a device driver (e.g., managing the transfer of data from the mobile monitoring device to a wireless network connection), etc., or may be generated by a user, such as a data entry, for example.

As weather data is monitored through routes, dew points may be derived. The temperature at which air with a given quantity of water vapor may be cooled to cause condensation of the vapor in the air may be linked to location data before it is retained in an on-board vehicle storage device. In some processes, an optional interface, such as an optional user interface or graphical user interface may allow a user to enter or review information. In Figure 2, at optional act 214, some or all of the surface temperature, relative humidity, ambient air temperature, and dew points may be reviewed before or after the data is transmitted to a local device or a remote destination. Through icons, menus, dialog boxes, etc., a user may select and review data elements. In some processes, user touch may allow a user to select or emulate an absolute pointing device and/or relative pointing device.

At act 216, a comparison between the surface and/or ambient temperature and the dew point occurs. When the surface and/or ambient temperatures are/is greater than the derived dew point, the process may repeat. When one or both of the temperatures are below the dew point, one or both of the temperatures may be compared to a programmed freezing point at act 218. When one or both of the temperatures are below the freezing point an audio, visual, tactile, or a combination of alerts may issues within or outside of the vehicle at acts 220 and 224. In alternative systems, audio, visual, tactile, or a combination of alerts may issue when the likelihood of a condition such as the likelihood of frost, ice, and/or black ice conditions is predicted. In some alternative systems the likelihood of a condition may be detected by identifying one or more trends (e.g., a comparison of periodic or sequential measurements with pre-programmed measurements or the occurrences of temperatures, humidity, and/or dew points within a range or at a predetermined value). When interfaced to external systems, alerts may be conveyed to dynamic sign controllers that may control variable speed limits on roadways, provide roadway alerts to one or more vehicles (e.g., highway warning signs) warning against hazardous visibility or road conditions (e.g., fog, ice, wet pavement, black ice, etc.), and/or automatically control the dispersion of media (such as salt and sand compounds) from a vehicle that may lower surface freezing points, improve traction, absorb moisture, increase friction coefficients, etc., between a vehicle and a surface. In some systems, the intensity or length of the alert may control the dispersion periods and/or rates.

A record of some or all of the transaction activities that occur through the process may be stored in a local memory, remote memory, or a remote log. In some processes, an audit trail traces all of the activities affecting some or each piece of data or information, such as a data record from the time it is entered into the process to the time it is removed. In these processes, the audit trail may make it possible to document, for example, who made changes to a record, when that change occurred, and when the document was transmitted to a destination.

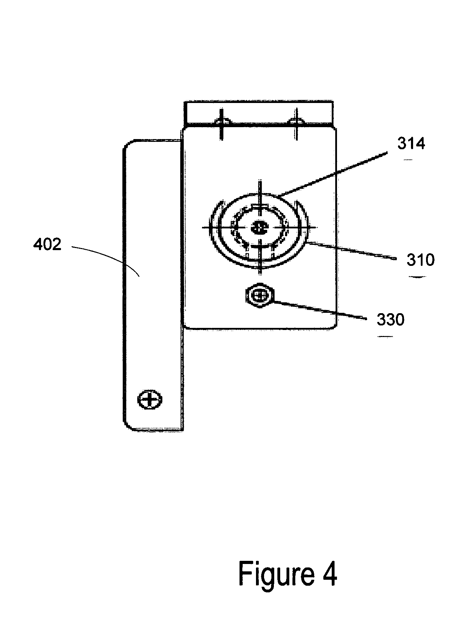

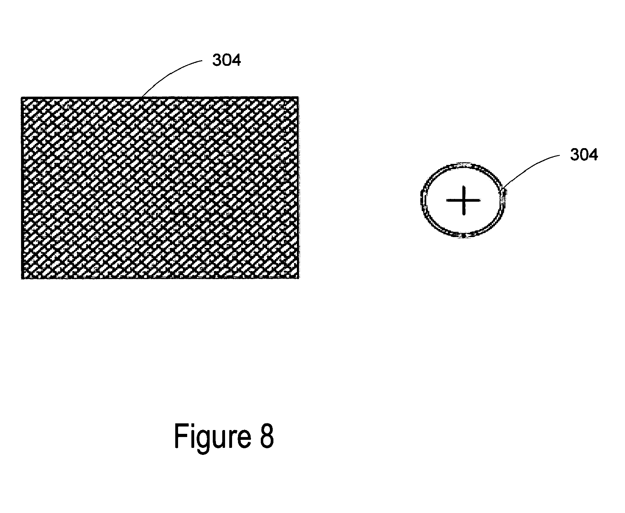

Figure 3 is a cross-sectional view of a portion of the mobile monitoring device 100 that includes the mobile sensing elements 302. The mobile sensing elements 302 may generate data to derive relative humidity (RH), measure ambient air temperature (AIR), and/or derive dew points (DEW PT). A right cylinder-like cover screen 304 (also shown in Figure 8) enclose the sensing elements 302 within a lateral truncated (e.g., open) sensor shell cover 306. While none of the elements that make up the mobile monitoring device 100 are limited to their illustrated or described shapes, in Figure 3 the sensor shell cover 306 has a right cylinder-like shape with its lateral truncated surface open to a distal end 308 (e.g., directed away from an expected air flow caused by vehicle movement through the air). A lateral truncated outer shell cover 310 partially encloses the lateral truncated sensor shell cover 306 (e.g., cover assembly) to form an uninterrupted airway bound by portions of the inner surfaces of the lateral truncated outer shell cover 310 and portions of the outer surfaces of the lateral truncated outer shell cover 310 (as shown in Figures 3 and 4). The airway originates at an air inlet positioned near a proximal end 312 and passes through the cover screen 304 before terminating at an air outlet that feeds an air space or pocket 324 that may partially or completely surround portions of the mobile sensing elements 302. In Figure 3, the outer shell cover 310 has a right cylinder-like shape with its lateral truncated surface open to the proximal end 312 (e.g., directed toward an expected air flow caused by vehicle movement through the air). By the dimensions of the openings, positions of the openings and the dimensions of the separation between the sensor shell cover 306 and the outer shell cover 310 the mobile monitoring device 100 may control air flow to the mobile sensing elements 302 and protect the mobile sensing elements 302 from contaminants.

A gap or drain between the cover screen 304 and a sensor cover end cap 314 may draw off or cause liquid to fall from the air (or media) within the air space or pocket 324. A protective device, structure, or visor 316 may shield the sensor shell cover 306 and the outer shell cover 310 from some or nearly all of the radiant energy that may be emitted from the sun. The obtuse angled like visor 316 insulates the air and moisture (e.g., media) within the air space and pocket 324 from the heat and visible light emitted from the sun. A housing 318 supports the visor 316, the sensor shell cover 306, the outer shell cover 310, and the mobile sensing elements 302 through mechanical engagements (the mobile sensing elements 302 may couple the housing 318 through a helical threaded engagement 320). Housing 318 covers, protects, and supports a controller or processor 110 shown as a circuit assembly 322 in Figure 3. The circuit assembly 322 receives and processes the digital (or in alternative systems, analog) output of the mobile sensing elements 302. The circuit assembly 322 may be isolated and secured to the housing 318 through an isolating strain relief connector 326 that may absorb vibrations. In some systems, the circuit assembly 322 processes the data packets to identify air temperature, derive a temperature at which water vapor in the air becomes saturated and condensation begins (e.g., dew point), and/or derive the ratio of the amount of water in the air at the detected temperature to the maximum it could hold at that temperature (e.g., relative humidity). In operation, some circuit assemblies 322 may buffer the data received from the mobile sensing elements 302, normalize that data through a moving or a rolling average (e.g., smooth out short-term fluctuations to highlight longer term trends), and derive relative humidity and dew points. The data may be written to an on-board storage device (or storage devices) that may have one or more (e.g., two or more) memory partitions.

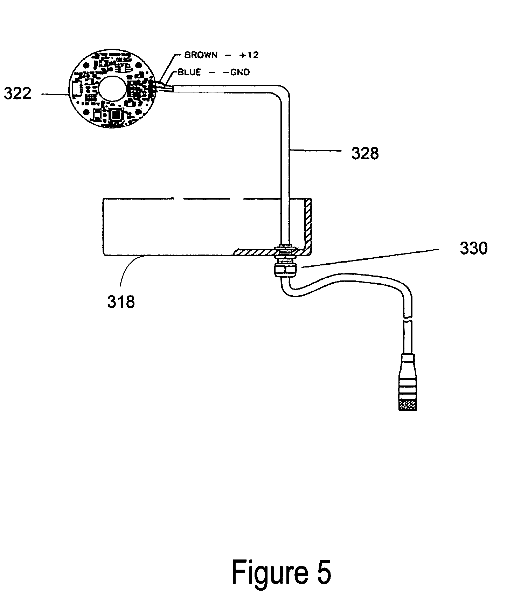

In Figures 3 and 5 the circuit board assembly 322 may communicate with one more external devices, the optional interface or console 112, or vehicle components through a wireless or tangible interface (a tangible interface cable 328 is shown). When an interface cable 328 is used, an isolating strain relief connector 330 may secure the interface cable 328 to the housing 318 and absorb vibrations. The mobile monitoring device 100 may interface and couple many vehicle types. In some applications, one or more mounting brackets (one 402 is shown in Figure 4) may position the mobile sensing elements 302 and surface temperature sensor 104 at a location that ensures optimal performance. A mounting bracket may ensure the surface temperature sensor 104, which may comprise an infrared sensor or optical sensing device, has an unobstructed view of the sensing target (e.g., a portion of the road surface near the vehicle) and is positioned away from vehicle surfaces that absorb or generate heat such as hot engine surfaces or near exhaust pipes. When mounting the mobile sensing elements 302, the mounting bracket 402 may ensure that the mobile sensing elements 302 are not exposed directly to artificial heat sources (e.g., near an engine or engine exhaust) or near vehicle surfaces that radiate heat when exposed to direct sun light. In some applications the brackets ensure that the mobile sensing elements 302 and surface temperature sensor 104 are not installed in locations prone to excessive roadway debris or other sources of contaminants.

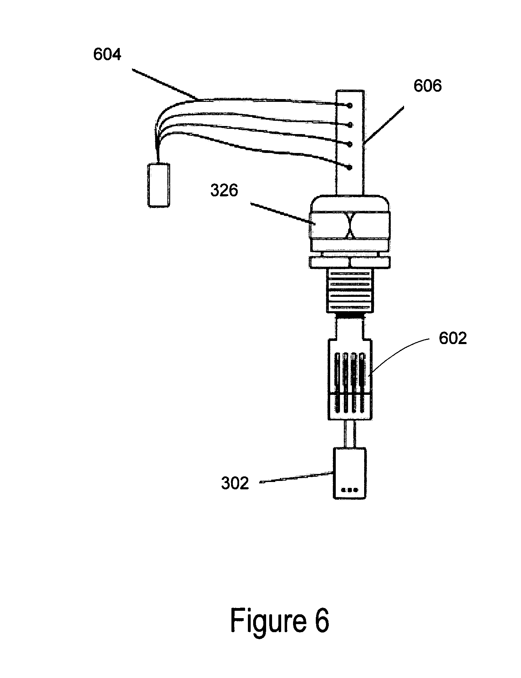

The mobile sensing elements 302 shown in Figure 6 may couple a sensor board 602. A fusible alloy may join the sensing elements 302 to the sensor board 602 to stiffen the sensing elements 302 against vibrations and position the sensing elements within the air space or pocket 324. The sensing elements 302 may be secured to the housing through the isolating strain relief connector 326. A local sensor bus 604 facilitates data exchange between the mobile sensing elements 302 and the controller or processor 110 (e.g., circuit assembly 322 in Figure 3) through an interface board 604 and delivers power to the sensing elements 302.

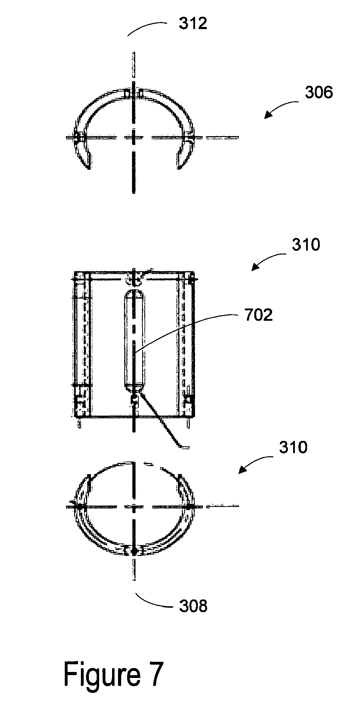

To protect the sensing elements 302 against roadway and other environmental materials that may affect performance, the outer shell cover 310 in some mobile monitoring device 100 may include an opening that allows air to flow through the outer shell cover 310. As shown in cylindrical and substantially flat shape illustrations in Figure 7, some outer shell covers 310 include a substantially obround passage or opening 702 that allows air to flow through the outer cover and debris and other materials to flow out. By maintaining this self-cleaning configuration the sensing elements 302 may function in all types of weather conditions with little maintenance. The right cylinder-like cover screen 304 shown in Figure 8 may be cleaned and/or replaced. This may occur when the sensing elements 302 are exposed to a large amount of chemicals, dust, or other contaminants. The modular design of some mobile monitoring devices 100 allow the mobile sensing elements 302 and surface temperature sensor 104 to be cleaned, maintained, and/or easily replaced.

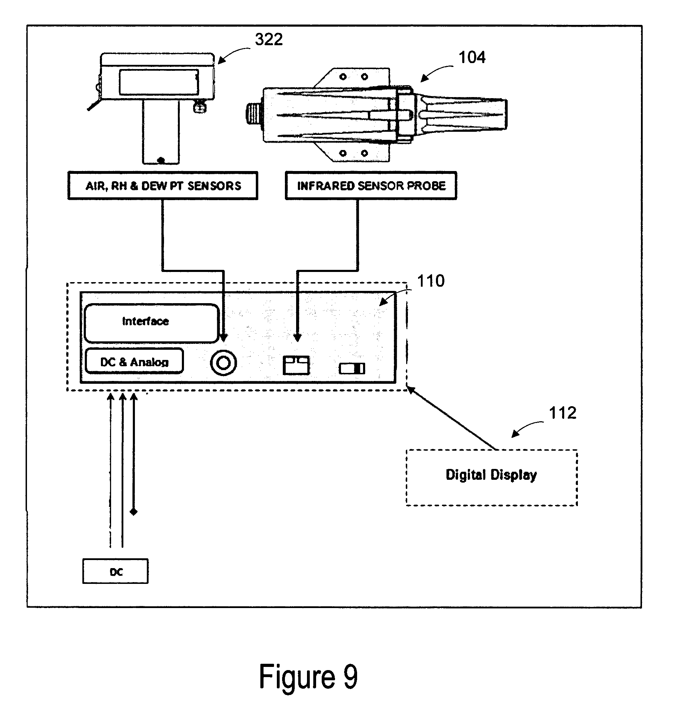

In Figure 9, a mobile monitoring device 100 includes mobile sensing elements 302 and surface temperature sensor 104. The mobile sensing elements include one or more air temperature sensors (AIR), relative humidity sensors (RH), and dew point sensors (DEW PT). The surface temperature sensor may comprise an infrared roadway sensor probe that absorbs infrared emissions from a road surface and converts those emissions into electrical signals. The controller or processor 110 may process and scale the electrical signals to determine a roadway surface temperature. In some mobile monitoring device 100 systems the controller or processor's 110 determination of the dew point and comparison to the ambient air temperature and the roadway surface temperature is used to determine the likelihood of condensation forming on the roadway surface, and the likelihood of this condensation forming frost, ice, or black ice conditions. Some mobile monitoring device systems 100 may also provide a variable (scalable) visible, audible, or tactile indicators that may indicate the presence of these conditions, the severity of these conditions (e.g., visual, audio, tactile indicators may be scaled to the predicted severity), and/or changes in these conditions. The warnings or data alert vehicle occupants or provide data to other applications or users.

The methods and descriptions of Figures 1 - 9 may be programmed in one or more dedicated processors, back-end processor (processors that perform specialized tasks). controllers or may be encoded in a signal bearing storage medium, a computer readable medium such as a memory that may comprise unitary or separate logic, programmed within a device such as one or more integrated circuits, retained in memory and/or processed by a controller or a computer. If the methods and descriptions are performed by software, the software or logic may reside in a memory resident to or interfaced to one or more processors or controllers that may support a tangible communication interface, wireless communication interface, or a wireless system. The memory may include an ordered listing of executable instructions for implementing logical functions. A logical function may be implemented through digital circuitry, through source code, or through analog circuitry. The software may be embodied in a computer-readable medium or signal-bearing medium, for use by, or in connection with an instruction executable system, apparatus, and device, resident to system that may maintain a persistent or non-persistent connection with two or more mobile monitoring devices or an intermediary that may convey data between vehicles or remote sites. Such a system may include a computer-based system, a vehicle processor-containing system, or another system that includes an input and output interface that may communicate with a publicly accessible distributed network through a wireless or tangible communication bus through a public and/or proprietary protocol.

In some mobile monitoring devices or at remote Internet sites, on-board storage devices or remote memory may aggregate environmental measurements from a plurality of mobile sensors or mobile monitoring devices 100. Computer readable medium or code executed by an environmental processor or controller may derive relative humidity and/or dew point information that may be based on the measurements provided by the mobile sensors. The code may control the communication between local or remote destinations that may process or display the information or aspects of the information.

A "computer-readable medium," "machine-readable medium," "propagated-signal" medium, and/or "signal-bearing medium" may comprise a medium that contains, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection having one or more wires, a portable magnetic or optical disk, a volatile memory such as a Random Access Memory (RAM), a Read-Only Memory (ROM), an Erasable Programmable Read-Only Memory (EPROM or Flash memory), or an optical fiber. A machine-readable medium may also include a tangible medium upon which software is printed, as the software may be electronically stored as an image or in another format (e.g., through an optical scan), then compiled, and/or interpreted or otherwise processed. The processed medium may then be stored in a computer and/or machine memory.

Other alternative mobile monitoring devices 100 or methods may be implemented with any combination of structures and/or functions described above or shown in Figures 1 - 9. These systems or methods may be formed from any combination of structure and/or function described above or illustrated within these Figures. Besides the description above, the processes and logic may be implemented in other software or hardware. The hardware may include a mobile in-vehicle processor or a controller in communication with a volatile and/or non-volatile memory that interfaces peripheral devices through a wireless or a tangible medium. Some processor-based systems may improve modeling and forecasting of weather conditions. The modeling may render Geographical Information System (GIS) maps that may integrate real-time climatic, forecast, and weather information generated through the geographic references and the sensor/weather data. In some models, the geographic referenced data monitored and/or derived by a mobile monitoring device 100 may be projected or layered over satellite, topology, supplemental observations, and/or radar generated maps by a local or remote controller to allow for a spatial analysis of the weather or road conditions on demand or in real-time. The maps, models, trend analysis, etc., may improve road conditions and analysis of routes.

Some mobile monitoring systems and processes may interface an on-board vehicle bus to access and transmit vehicle data elements that may be affected by weather conditions too. Sensors that monitor headlight use, acceleration, rates of change in steering, exterior temperature, windshield wiper events and rates (e.g., intermittent, low, high), rain events and rates, manifold and absolute pressure, wheel events (e.g., antilock braking, stability control, throttle variations, etc.) and other in-vehicle data in which information about a roadway that may inferred and/or derived may be accessed through an on-board or virtual vehicle bus and stored in local or remote memory through the mobile monitoring device 100. Some systems and processes may normalize the vehicle and/or weather data locally (e.g., in-vehicle) or at a remote site (e.g., Internet site) to minimize variance or bias that may be caused by a vehicle or the device (e.g., sensor positions and/or changes related to operation).

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

**1.** A system that determines air temperatures and humidity from a mobile platform comprising:
a first mobile sensor that measures a dew point and an ambient air temperature;
a second mobile sensor that measures a roadway surface temperature; and
a mobile processor that processes sensor data from the first sensor and the second sensor to determine the likelihood of condensation forming on the roadway surface;
where the processor is programmed to determine the likelihood of the condensation forming frost, ice, or black ice on the roadway surface.

**2.** The system of claim 1 further comprising an interface that connects the processor to a user interface in a vehicle.

**3.** The system of claim 1 further comprising a transceiver that transmits sensor information to a remote destination from the processor.

**4.** The system of claim 1 further comprising a transceiver configured to transmit the processed data and location data of a vehicle when a measured weather condition changes.

**5.** The system of claim 2 where the graphical user interface generates indicators identifying weather conditions based upon measured and derived data elements generated by the processor.

**6.** The system of claim 1 further comprising a transceiver configured to wirelessly transmit the processed in vehicle data to a remote Internet site.

**7.** The system of claim 1 further comprising a transceiver configured to wirelessly transmit a plurality of dew point data packets to a remote server in real-time.

**9.** The system of claim 1 where the processor is programmed to generate a visual or an auditory signal that indicates the presence of the frost, the ice, or the black ice condition.

**10.** The system of claim 1 further comprising a transceiver programmed to transmit sensor data to a remote location as sensor data is processed by an in-vehicle processor.

**11.** A system that compares surface temperature and dew point in a mobile environment comprising:
a first mobile sensor that measures a dew point and an ambient air temperature;
a cover assembly that forms an uninterrupted curved airway that originates at an air inlet and terminates at an air outlet that feeds an enclosed air pocket that partially surrounds the first mobile sensor;
a second mobile sensor that measures roadway surface temperature; and
an in-vehicle processor that processes sensor data from the first sensor and the second sensors and predicts the likelihood of condensation forming on the roadway surface at a plurality locations while the first mobile sensor, the cover assembly, the second mobile sensor and the in-vehicle processor are in motion.

**12.** The system of claim 11 further comprising a transmitter configured to transmit data to a local and a remote destination.

**13.** The system of claim 12 where the in-vehicle processor is programmed to compare dew point data to the ambient air temperature data and roadway surface temperature data in the vehicle to predict the likelihood that the condensation forms a frost, an ice, or a black ice condition.

**14.** The system of claim 12 where the transmitter couples a first vehicle and communicates with a mesh network that conveys the sensor data to a second vehicle.

**15.** The system of claim 12 where the transmitter couples a first vehicle and communicates with a stationary network that conveys the sensor data to a second vehicle.

**16.** The system of claim 12 where the transmitter couples a first vehicle and communicates with a stationary network.

**17.** The system of claim 11 where the cover assembly comprises a plurality of cylindrical truncated elements that forms the air inlet, air outlet, and the airway.

**18.** The system of claim 17 further comprising a filter tube disposed between the air inlet and the air outlet.

**19.** A system that compares air temperature and dew point data in a mobile environment comprising:
a first mobile sensor that measures a dew point and an ambient air temperature;
a cover assembly that forms an uninterrupted airway that originates at an air inlet and terminates at an air outlet and feeds an air filter and an enclosed air pocket formed by the cover assembly, where the cover assembly and the air filter partially surrounds the first mobile sensor;
a second mobile sensor that measures roadway surface temperature;
an in-vehicle processor that processes sensor data from the first mobile sensor and the second mobile sensor and predicts the likelihood of condensation forming on the roadway surface; and
a local in-vehicle bus that facilities a data transfer between the in-vehicle processor and the first mobile sensor.

**20.** The system of claim 19 where the vehicle processor communicates with an in-vehicle transmitter that conveys the results to an in-vehicle display.

**21.** The system of claim 20 further comprising an output device that generates a visual and an audible warning when the in-vehicle processor predicts a likelihood of the condensation forming frost, ice, or black ice condition on the roadway surface.

**22.** The system of claim 19 further comprising a transmitter configured to transmit the sensor data to a display and to a remote server based in part on the vehicle processor's comparison of a dew point to a measured roadway surface temperature.
